# EUROPÄISCHE PATENTSCHRIFT

(11) **EP 0 726 830 B1**
(45) Veröffentlichungstag und Bekanntmachung des Hinweises auf die Patenterteilung: **17.02.1999**
(21) Anmeldenummer: 94927646.3
(22) Anmeldetag: 24.09.1994
(51) Int. Cl.: B23K 26/02

(54) **VERFAHREN ZUR BESTIMMUNG DER MOMENTANEN UND HERBEIFÜHRUNG EINER GEWÜNSCHTEN EINDRINGTIEFE EINES BEARBEITUNGSLASERSTRAHLES IN EIN WERKSTÜCK SOWIE VORRICHTUNG ZUR DURCHFÜHRUNG DIESES VERFAHRENS**
PROCESS AND DEVICE FOR DETERMINING THE MOMENTARY AND MAINTAINING THE DESIRED DEPTH OF PENETRATION OF A MACHINING LASER BEAM INTO A WORKPIECE
PROCEDE ET DISPOSITIF POUR DETERMINER LA PROFONDEUR DE PENETRATION MOMENTANEE ET MAINTENIR LA PROFONDEUR DE PENETRATION SOUHAITEE D'UN FAISCEAU LASER D'USINAGE DANS UNE PIECE

(30) Priorität: 01.10.1993 DE 4333501
(43) Veröffentlichungstag der Anmeldung: 21.08.1996
(73) Patentinhaber: UNIVERSITÄT STUTTGART INSTITUT FÜR STRAHLWERKZEUGE, 70569 Stuttgart (DE)
(72) Erfinder: DAUSINGER, Friedrich, D-70193 Stuttgart (DE); GRIEBSCH, Jürgen, D-71144 Steinenbronn (DE); HACK, Rüdiger, D-73265 Dettingen (DE)
(74) Vertreter: Ostertag, Reinhard
(86) Internationale Anmeldenummer: EP9403190
(87) Internationale Veröffentlichungsnummer: WO9509713

(56) Entgegenhaltungen:
- WO-A-92/14578
- DE-A- 2 538 660
- DE-A- 3 710 816
- US-A- 4 789 770
- US-A- 4 952 770
- LASER UND OPTOELEKTRONIK., Bd.21, Nr.3, Juni 1989, STUTTGART DE Seiten 69 - 72, XP49079 M. ALAVI 'Lichtemission während des Laserschweissprozesses'

## Beschreibung

Die Erfindung betrifft ein Verfahren zur Bestimmung der momentanen und Herbeiführung einer gewünschten Eindringtiefe eines Bearbeitungslaserstrahles in ein Werkstück sowie eine Vorrichtung zur Durchführung dieses Verfahrens

Laserstrahlen werden in unterschiedlichster Weise zur Bearbeitung von Werkstücken eingesetzt, so z.B. zum Oberflächlichen Umschmelzen, zur Herstellung von Verbindungsschweißungen oder zum Einbringen von Bohrungen. In all diesen Fällen ist es von großer Bedeutung, die Eindringtiefe des Laserstrahles in das Werkstück zu erfasssen und sicherzustellen, daß diese den gewünschten Wert erreicht und ggf. konstant beibehält. Bei Verbindungsschweißungen ist dies beispielsweise deshalb wichtig, weil einerseits die Schweißschmelze tief genug in die miteinander zu verbindenden Teile hineinreichen muß, damit eine zuverlässige Vereinigung der Teile erzielt wird, weil aber andererseits die Schweißung auch nicht aus dem untenliegenden Teil austreten soll, was zur Beschädigung von Sichtoberflächen führen könnte. Dies gilt beispielsweise bei der Schweißverbindung von Blechen, die als Karosserieteile beim Automobilbau Verwendung finden.

Bisher wurde die richtige Eindringtiefe beim Laserschweißen im wesentlichen stichprobenartig durch Herstellung von Schliffbildern an fertiggestellten Werkstücken kontrolliert Dieses Verfahren ist jedoch verhältnismäßig aufwendig, da eine nicht ausreichende oder zu große Eindringtiefe erst festgestellt wird, wenn bereits Ausschuß erzeugt wurde.

Aus der DE-OS 37 10 816 ist ein Verfahren bekannt, bei welchem die Qualität eines Laser-Bearbeitungsvorganges an einem Werkstück durch Beobachtung des am Werkstück reflektierten Laserlichtes überwacht wird. Zwischen der Eindringtiefe des Laserstrahles und dem reflektierten Laserstrahlanteil wird hier jedoch keine Beziehung hergestellt; unregelmäßige Veränderungen in der Intensität des reflektierten Laserlichtes werden einfach als Abweichungen von den gewünschten Betriebsbedingungen des Bearbeitungslaserstrahles interpretiert.

In der EP-A-0 299 702 ist ein Verfahren beschrieben, bei welchem die Tiefe einer durch einen Laserstrahl erzeugten Bohrung in einer Laminatstruktur durch die in der Bohrung reflektierte Laserstrahlung überwacht wird. Hierbei wird aber ausschließlich das unterschiedliche Reflexionsvermögen der verschiedenen in der Laminatstruktur enthaltenen Materialien ausgenutzt; die plötzliche Veränderung des reflektierten Laserlichtanteiles wird mit dem Erreichen einer neuen Grenzschicht innerhalb des Laminates identifiziert. Dieses bekannte Verfahren eignet sich nicht zur Überwachung der Eindringtiefe eines Laserstrahles in einem homogenen Werkstoff.

DE-A-2538660 offenbart ein Verfahren zum Steuern des Gravierens mittels eines Laserstrahls. Dabei wird eine Änderung des Reflexionsverhaltens bei der Gravur eines Tiefdruckzylinders ermittelt : in dem Augenblick in welchem die Abtragung von Material beginnt, ändert sich die Reflexion des Lasers an der Oberfläche des Druckzylinders.

In der WO-A-92 14 578 ist ein Verfahren zur Überwachung der Laserbearbeitung von Werkstücken beschrieben, bei welchem die aus dem von dem Laser erzeugten Plasma oder Dampf herrührenden optischen und/oder akustischen Signale erfaßt werden und hieraus Rückschlüsse auf den Ablauf des Bearbeitungsprozesses gewonnen werden.

In der Zeitschrift "Laser und Optoelektronik", 1989, Juni, Seiten 69-71, ist ein Verfahren beschrieben, bei welchem optische Signale im nahen IR-Bereich und bei der Wellenlänge des Bearbeitungslasers erfaßt werden. Die Erfassung des IR-Signales dient dabei vorrangig dem Zweck, die Wechselwirkungsmechanismen zwischen Laserstrahl und Werkstück in ihren Grundlagen besser verstehen zu können. Eine Interpretation dieses IR-Signales im Sinne einer Verwendung als Meßgröße für die Einschweißtiefe findet nicht statt.

Aufgabe der vorliegenden Erfindung ist es, ein Verfahren der eingangs genannten Art so auszugestalten, daß auch in homogenen Materialien die Eindringtiefe kontinuierlich während des Bearbeitungsprozesses überwacht und an den gewünschten Wert herangeführt werden kann.

Diese Aufgabe wird erfindungsgemäß durch das in Anspruch 1 beschriebene Verfahren gelöst.

Das erfindungsgemäße Verfahren beruht auf der Erkenntnis, daß es eine eindeutige funktionale Beziehung zwischen dem prozentualen Anteil eines auf die Dampfkapillare gerichteten Laserstrahles, der reflektiert wird, und der Eindringtiefe des Laserstrahles, also der Tiefe der Dampfkapillare, gibt. Diese funktionale Beziehung beruht höchstwahrscheinlich auf dem Mechanismus der Mehrfachreflexionen innerhalb der Dampfkapillare; nach diesem Modell lassen sich Kurven errechnen, welche die Beziehung zwischen dem prozentualen reflektierten Anteil des Laserstrahles und dem Aspekt, also dem Verhältnis zwischen Tiefe und Fläche der Bohrung, widerspiegeln. Derartige Kurven lassen sich auch experimentell durch entsprechende Versuche ermitteln, bei denen jeweils punktweise bei einem bestimmten Aspekt der reflektierte Laserstrahlanteil ermittelt wird.

Im einfachsten Falle wird zur Erzeugung des Bearbeitungslaserstrahles und des Meßlaserstrahles derselbe Laser verwendet. Es versteht sich ohne weiteres, daß hier der apparative Aufbau am wenigsten aufwendig und die Kosten am kleinsten sind. Allerdings hat diese Variante des erfindungsgemäßen Verfahrens folgenden Nachteil: Aus Ökonomiegründen sollte die vom Bearbeitungslaser bereitgestellte Energie zu einem möglichst hohen Prozentsatz (über 90%) in das Werkstück eingekoppelt werden. Bei dieser für die Effizienz des Verfahrens wichtigen hohen Einkopplung des Bearbeitungslaserstrahles ist allerdings die charakteristische Kurve, welche den Zusammenhang zwischen Tiefe der Dampfkapillare und reflektiertem prozentualen Anteil des Laserstrahles herstellt, verhältnismäßig flach; die Bestimmung der Eindringtiefe ist somit verhältnismäßig unempfindlich.

Genügt daher in bestimmten Anwendungsfällen die Empfindlichkeit des Meßverfahrens bei Verwendung eines einzigen Lasers nicht, so kann von dem physikalischen Phänomen Gebrauch gemacht werden, daß die charakteristischen Kurven umso langsamer in einen flachen Bereich übergehen, umso größer die Wellenlänge des zur Messung verwendeten Laserstrahles ist. Dann empfiehlt sich somit eine Verfahrensvariante, bei welcher zur Erzeugung des Bearbeitungslaserstrahles und des Meßlaserstrahles zwei unterschiedliche Laser verwendet werden, wobei die Wellenlänge des Meßlaserstrahles größer als diejenige des Bearbeitungslaserstrahles ist. Der Meßlaserstrahl kann so unabhängig von dem auf höchstmöglichen Wirkungsgrad eingestellten Bearbeitungslaser in einer Weise betrieben werden, bei welcher die Meßempfindlichkeit hoch ist.

Das erfindungsgemäße Verfahren kann beispielsweise dazu eingesetzt werden, in einem Werkstück eine Bohrung mit einer bestimmten Tiefe zu erzielen. Dann sieht seine Ausgestaltung so aus, daß
a) in einem Vorversuch ermittelt wird, welcher prozentuale Anteil des Meßlaserstrahles bei der gewünschten Tiefe der Bohrung am Werkstück reflektiert wird;
b) während der Herstellung der Bohrung durch den Bearbeitungslaserstrahl bei stillstehendem Werkstück kontinuierlich der reflektierte prozentuale Anteil des Meßlaserstrahles überwacht wird und der Bearbeitungslaserstrahl unterbrochen wird, wenn der reflektierte prozentuale Anteil des Meßlaserstrahles den im Vorversuch ermittelten Wert erreicht hat.

Mit wachsender Tiefe der Bohrung sinkt der reflektierte Anteil des Meßlaserstrahles, bis er dann bei Erreichen der Solltiefe dem vorher bestimmten Sollwert entspricht.

Das erfindungsgemäße Verfahren läßt sich auch dazu verwenden, ein Werkstück bis zu einer bestimmten Tiefe aufzuschmelzen oder eine Schweißung in einem Werkstück bis zu einer bestimmten Tiefe einzubringen. Dann zeichnet sich das erfindungsgemäße Verfahren dadurch aus, daß
a) in einem Vorversuch ermittelt wird, welcher prozentuale Anteil des Meßlaserstrahles bei der gewünschten Tiefe der Schmelze am Werkstück reflektiert wird;
b) während der Herstellung der Schmelze durch den Bearbeitungslaserstrahl bei einer Relativbewegung zwischen Bearbeitungslaserstrahl und Werkstück kontinuierlich der reflektierte prozentuale Anteil des Meßlaserstrahles überwacht wird und Abweichungen zwischen dem momentanen reflektierten prozentualen Anteil des Meßlaserstrahles und dem im Vorversuch ermittelten Wert durch Nachführen der in das Werkstück durch den Bearbeitungslaserstrahl pro Zeit- und Flächen einheit eingekoppelten Energie ausgeregelt werden.

Bei dieser Verfahrensvariante ist also eine echte Regelschleife vorgesehen, welche kontinuierlich dafür sorgt, daß die Schmelztiefe während der Bewegung des Werkstückes immer dem gewünschten Sollwert entspricht.

Bei einer Ausgestaltung dieses Verfahrens erfolgt die Regelung durch Veränderung der mittleren Leistung des Bearbeitungslaserstrahles.

Alternativ ist es auch möglich, diese Regelung durch Veränderung der Relativgeschwindigkeit zwischen Bearbeitungslaserstrahl und Werkstück vorzunehmen. Soll die pro Zeit- und Flächen einheit eingekoppelte Energie des Bearbeitungslaserstrahles reduziert werden, so wird die Relativgeschwindigkeit zwischen Werkstück und Laserstrahl erhöht; zur Vergrößerung der pro Zeit- und Flächen einheit in das Werkstück eingekoppelten Energie des Bearbeitungslaserstrahles wird umgekehrt die Relativgeschwindigkeit zwischen Bearbeitungslaserstrahl und Werkstück erniedrigt.

Schließlich ist es auch möglich, daß die Regelung durch Defokussierung des Bearbeitungslaserstrahles erfolgt.

Aufgabe der vorliegenden Erfindung ist es außerdem, eine Vorrichtung zur Durchführung der oben geschilderten Verfahren zu schaffen, mit welcher kontinuierlich die Eindringtiefe des Laserstrahles erfaßt und an einen gewünschten Wert herangeführt werden kann.

Diese Aufgabe wird erfindungsgemäß durch die in Anspruch 9 beschriebene Vorrichtung gelöst.

Die erfindungsgemäße Vorrichtung beruht auf denselben physikalischen Prinzipien, die oben bereits für das erfindungsgemäße Verfahren erläutert wurden. Auch die Vorteile der erfindungsgemäßen Vorrichtung stimmen sinngemäß mit den oben beschriebenen Vorteilen des erfindungsgemäßen Verfahrens überein.

Die apparativ einfachste und kostengünstigste Ausgestaltung der erfindungsgemäßen Vorrichtung ist die, bei welcher ein einziger Laser vorgesehen ist, dessen Strahl sowohl als Bearbeitungs- als auch als Meßlaserstrahl dient.

Die Meßgenauigkeit kann aus den oben schon erläuterten Gründen durch eine Vorrichtung verbessert werden, bei welcher zwei unterschiedliche Laser vorgesehen sind, von denen der erste den Bearbeitungslaserstrahl und der zweite den Meßlaserstrahl erzeugt, wobei die Wellenlänge des Meßlaserstrahles größer als diejenige des Bearbeitungslaserstrahles ist.

Grundsätzlich ist es gleichgültig, woher das Referenzsignal stammt, sofern es nur in der Lage ist, einen Sollwert für die Eindringtiefe zu repräsentieren. Im einfachsten Falle könnte es sich bei der Referenzsignalquelle um eine Spannungsquelle handeln, deren abgegebene Spannung empirisch auf den gewünschten Wert eingestellt wird.

Bei einer bevorzugten Ausführungsform der Erfindung umfaßt die Referenzsignalquelle einen Speicher, in welchem ein in einem Vorversuch ermittelter Wert ablegbar ist, welcher dem reflektierten prozentualen Anteil des Meßlaserstrahles bei einer gewünschten Eindringtiefe des Bearbeitungslaserstrahles entspricht.

Dieses Konstruktionsprinzip kann so weit geführt werden, daß in dem Speicher eine Kurve abgelegt ist, welche die funktionale Beziehung zwischen der Eindringtiefe des Bearbeitungslaserstrahles und dem reflektierten prozentualen Anteil des Meßlaserstrahles wiedergibt. Es ist dann nach entsprechender Eichung durch Vorversuche möglich, aus dem Speicher jeweils denjenigen Punkt der Kurve abzurufen, der einer im Einzelfall gewünschten Eindringtiefe des Lasers entspricht.

Die erfindungsgemäße Vorrichtung kann zur Herstellung von Bohrungen eingesetzt werden. Sie wird dann so gestaltet, daß
a) das Werkstück gegenüber dem Bearbeitungslaserstrahl fest positioniert ist;
b) der Komparator ein Ausgangssignal abgibt, wenn das Ausgangssignal des Sensors dem Referenzsignal entspricht;
c) die Steuereinheit den Bearbeitungslaser bei Empfang des Ausgangssignales des Komparators unterbricht.

Großen Einsatzbereich finden auch solche Vorrichtungen, mit welchen das Werkstück bis zu einer bestimmten Tiefe aufschmelzbar ist oder eine Schweißung in ein Werkstück bis zu einer gewissen Tiefe einbringbar ist. Derartige Vorrichtungen zeichnen sich dadurch aus, daß
a) eine Einrichtung vorgesehen ist, welche eine Relativbewegung zwischen dem Werkstück und dem Bearbeitungslaserstrahl erzeugt;
b) der Komparator ein Ausgangssignal abgibt, welches für die Abweichung zwischen dem Ausgangssignal des Sensors und dem Referenzsignal repräsentativ ist;
c) die Steuereinheit eine Regeleinrichtung umfaßt, welche durch Veränderung der in das Werkstück pro Zeit- und Flächen einheit durch den Bearbeitungslaserstrahl eingekoppelten Energie das Ausgangssignal des Komparators auf Null zurückführt.

Die Veränderung der mittleren eingekoppelten Energie kann in drei unterschiedlichen Arten erfolgen:

Entweder beeinflußt die Steuereinheit die Geschwindigkeit der Relativbewegung zwischen Werkstück und Bearbeitungsstrahl oder die Steuereinheit beeinflußt die Leistung des Bearbeitungslaserstrahles. Die dritte Möglichkeit besteht darin, daß die Steuereinheit die Fokussierung des Bearbeitungslaserstrahles beeinflußt.

Ausführungsbeispiele der Erfindung werden nachfolgend anhand der Zeichnung näher erläutert; es zeigen
- Figur 1:: einen Schnitt durch zwei übereinanderliegende Bleche während ihrer Verschweißung durch einen Bearbeitungslaserstrahl;
- Figur 2:: charakteristische Kurven, welche die Abhängigkeit des Einkopplungsgrades der Laserenergie (in Prozent) vom Aspekt der durch den Bearbeitungslaserstrahl erzeugten Dampfkapillare darstellen;
- Figur 3:: schematisch ein erstes Ausführungsbeispiel einer Vorrichtung zum Schweißen zweier Bleche;
- Figur 4:: ein zweites Ausführungsbeispiel einer Vorrichtung zum Schweißen zweier Bleche.

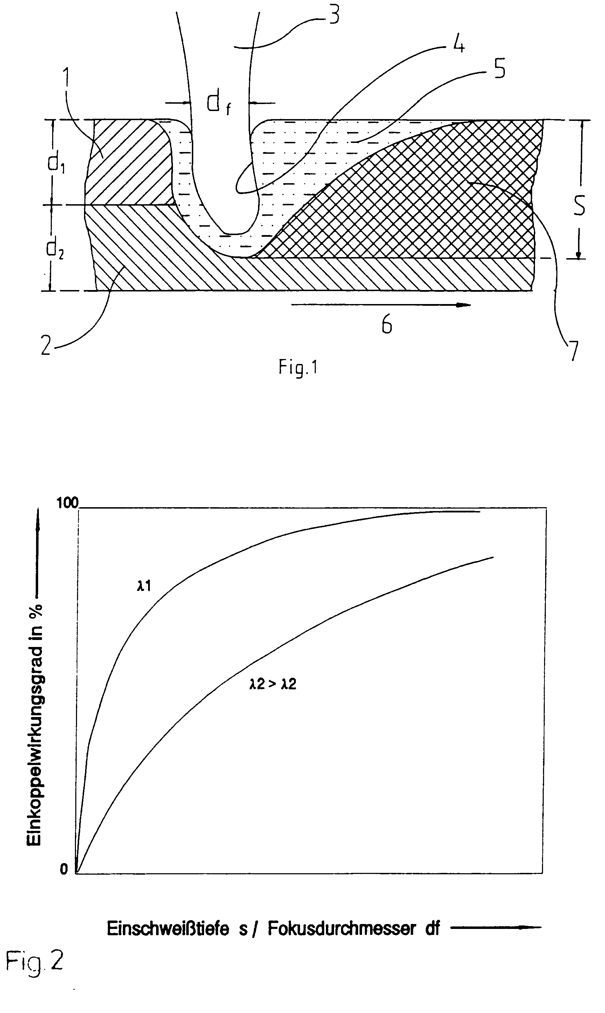

In Figur 1 sind zwei übereinanderliegende Bleche 1, 2 im Schnitt dargestellt. Durch einen im wesentlichen senkrecht auf das obere Blech 1 auffallenden Bearbeitungslaserstrahl 3 bildet sich im Material der Bleche 1, 2 eine Dampfkapillare 4 mit einem bestimmten Durchmesser df. Die Dampfkapillare 4 reicht durch das Blech 1 vollständig, durch das Blech 2 jedoch nur teilweise hindurch. Sie ist von einer Schmelze 5 umgeben.

Die übereinanderliegenden Bleche 1 und 2 werden im Sinne des Pfeiles 6 unter dem Bearbeitungslaserstrahl 3 hindurchbewegt. Die Tiefe s der Schmelze 5, gemessen von der Oberseite des oberen Bleches 1, ist nur geringfügig größer als die Tiefe der Dampfkapillare 4; sie kann dieser also annähernd gleichgesetzt werden.

In einer gewissen Entfernung vom Laserstrahl 3 beginnt die Schmelze 5 zu erstarren; das erstarrte Material ist in Figur 1 mit einer Kreuzschraffur gekennzeichnet und mit dem Bezugszeichen 7 versehen.

In der Praxis ist es wichtig, einerseits für eine ausreichende Schweißtiefe s zu sorgen, damit die beiden Bleche 1, 2 zuverlässig miteinander verbunden sind. Andererseits darf die Schweißung nicht an der unteren Fläche des unteren Bleches 2 austreten, da sonst die Oberflächenqualität des aus den beiden Blechen 1, 2 erzeugten Werkstückes leiden würde. Mit anderen Worten: es muß zuverlässig dafür gesorgt werden, daß die Schweißtiefe s sicher größer als die Dicke d₁ des Bleches 1 aber auch zuverlässig kleiner als die Summe der Dicken d₁ + d₂ der Bleche 1 und 2 ist.

Um dies in der Praxis zu gewährleisten, wird von folgenden physikalischen Überlegungen Gebrauch gemacht:

Die Energieeinkopplung des Bearbeitungslaserstrahles 3 in das Material der Bleche 1 und 2 ist eine Funktion des Aspektes, also des Verhältnisses s/df, der Dampfkapillare 4. Unter der Annahme, daS die Abhängigkeit der Energieeinkopplung vom Aspekt auf einer Mehrfachreflexion des Laserstrahles 3 in der Dampfkapillare 4 beruht, läßt sich die Energieeinkopplung als Funktion des Aspektes berechnen; es ergeben sich Kurven, wie sie in Figur 2 qualitativ für zwei unterschiedliche Wellenlängen λ₁ und λ₂ > ₁ dargestellt sind. Diese Kurven zeichnen sich sämtliche dadurch aus, daß die in das Material des Werkstückes eingekoppelte Energie mit wachsendem Aspekt zunächst stark ansteigt, dann aber umbiegt und sich im wesentlichen asymptotisch der 100-Prozent-Linie nähert. Die Steilheit dieses Anstieges ist (bei im übrigen unveränderten Parametern) von dem Absorptionsgrad, also u.a. von der Wellenlänge des Laserlichtes abhängig: Bei größeren Wellenlängen erfolgt der Anstieg der Kurve und die Annäherung an die horizontale Asymptote langsamer.

Die in Figur 2 gezeigten Kurven für die Energieeinkopplung lassen sich auch als Kurven lesen, welche den jeweils reflektierten Anteil der Laserenergie zeigen: Eingekoppelte und reflektierte Energie ergänzen sich jeweils zu 100 %. Dies macht deutlich, daß sich durch Messung des prozentualen Anteils der am Werkstück reflektierten Laserenergie Aussagen über die Tiefe der Dampfkapillare 4 und damit im wesentlichen über die Tiefe s der Schmelze 5 gewinnen lassen.

Zur praktischen Verwertung der oben geschilderten Erkenntnisse können für das jeweils verwendete Material und den zum Einsatz kommenden Laser Kurven, wie sie in Figur 2 dargestellt sind, experimentell aufgenommen werden. Verschiedene Proben des zu schweißenden Materials werden unterschiedlich tief aufgeschmolzen und der reflektierte Anteil des Laserlichtes wird registriert. Die Schmelztiefe s wird quantitativ jeweils durch ein Schliffbild bestimmt. Auf diese Weise lassen sich für jeden konkreten Anwendungsfall quantitative Kurven, entsprechend der Figur 2, punktweise ermitteln.

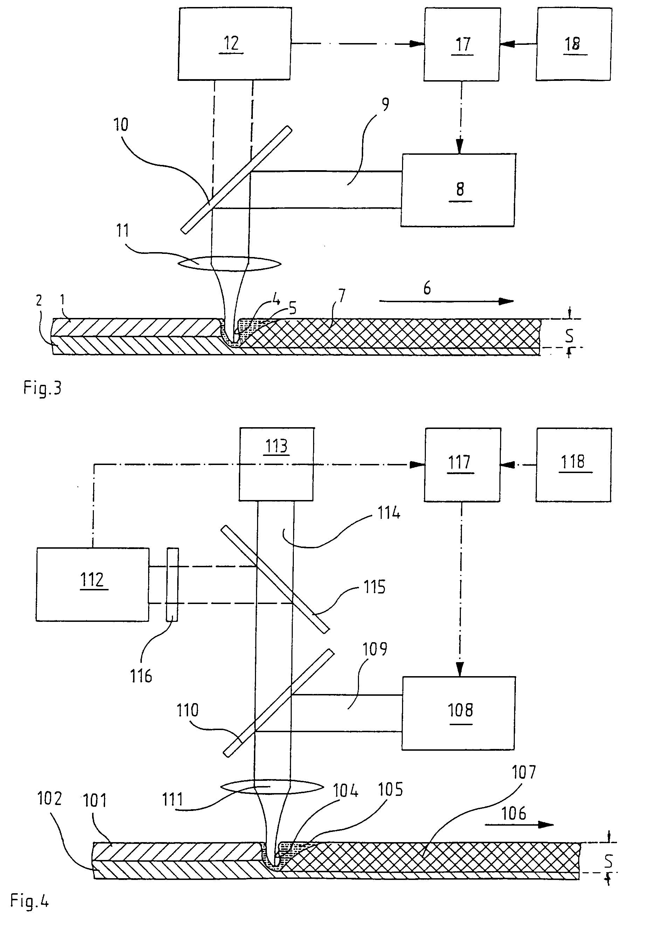

In Figur 3 ist ein erstes Ausführungsbeispiel einer Vorrichtung dargestellt, mit welcher eine geregelte Schweißtiefe erzielt werden kann. Die Vorrichtung umfaßt einen Laser 8, dessen Laserstrahl 9 über einen Strahlteiler 10 (teildurchlässiger Spiegel) und eine Fokussieroptik 11 auf das die beiden Bleche 1 und 2 umfassende Werkstück gerichtet wird. Der fokussierte Laserstrahl 9 erzeugt in den Blechen 1, 2 eine von einer Schmelze 5 umgebene Dampfkapillare 4, wie dies in Figur 1 dargestellt ist und oben erläutert wurde. Beim Verfahren des aus den Blechen 1, 2 gebildeten Werkstückes in Richtung des Pfeiles 6 entsteht so eine durch das erstarrte Material 7 gebildete Verschweißung, deren Tiefe s ist.

Zum Einstellen und zum Konstanthalten dieser Schweißtiefe s wird ausgenutzt, daß die prozentuale Energieeinkopplung des Laserstrahles 9 in die Bleche 1 und 2 eine Funktion der Schweißtiefe s ist, wie sie zuvor experimentell ermittelt und als Kurve entsprechend der Figur 2 in einem Speicher 18 abgelegt wurde. Die der jeweiligen prozentualen Energieeinkopplung entsprechende reflektierte Intensität des Laserstrahles wird durch einen Sensor 12 ermittelt, der hinter dem teildurchlässigen Spiegel 10 in der rückwärtigen Verlängerung des auf das Werkstück auffallenden Laserstrahles 9 angeordnet ist. Das Ausgangssignal des Sensors 12, welches proportional der reflektierten Laserintensität ist, wird einem Komparator 17 zugeführt und dort mit demjenigen Wert der im Speicher 18 abgelegten Kurve verglichen, welcher der gewünschten Schweißtiefe s entspricht.

Das Ausgangssignal des Komparators 17 wird der Steuereinheit des Lasers 8 zugeführt, mit welcher sich die Laserausgangsleistung verändern läßt.

Die Funktionsweise der in Figur 3 dargestellten Vorrichtung ist also wie folgt:

Die z.B. auf einen Koordinatentisch aufgespannten Bleche 1 und 2 werden unterhalb der Vorrichtung im Sinne des Pfeiles 6 vorwärtsbewegt, wobei der Laserstrahl 9 das Material der Bleche 1 und 2 aufschmilzt und eine Schweißnaht aus erstarrtem Material 7 zurückläßt. Während der Schweißung wird durch den Sensor 12 der prozentuale Anteil der reflektierten Laserenergie festgestellt. Ist dieser größer als der dem Sollwert der Schweißtiefe s entsprechende, in dem Speicher 18 abgelegte Wert der Kurve, so bedeutet dies, daß zu wenig Energie des Laserstrahles in das Werkstück eingekoppelt wird, die Dampfkapillare 4 und somit die Schweißtiefe 5 also zu gering ist. Durch Erhöhung der Leistung des Lasers 8 oder durch Verringerung der Vorschubgeschwindigkeit des Werkstückes wird nunmehr die Energieeinkopplung erhöht, bis die gewünschte Schweißtiefe s erreicht ist. Dann entspricht das Ausgangssignal des Sensors 12 dem in dem Speicher 18 abgespeicherten Sollwert. Veränderungen der mittleren Laserleistung oder der Vorschubgeschwindigkeit finden nun nicht mehr statt.

Wenn umgekehrt das Ausgangssignal des Sensors 12 kleiner als derjenige Wert der in dem Speicher 18 abgelegten Kurve ist, welcher der gewünschten Schweißtiefe s entspricht, so bedeutet dies, daß zu viel Energie des Laserstrahles 9 in das Werkstück eingekoppelt wird, daß also die Schweißtiefe s zu groß ist. Die Energieeinkopplung in der Zeiteinheit durch den Laserstrahl 9 wird nunmehr verringert, beispielsweise durch Erniedrigung der Laserleistung oder durch Erhöhung der Vorschubgeschwindigkeit des Werkstückes, bis durch die so bewirkte Reduktion der Energieeinkopplung das Ausgangssignal des Sensors 12 wieder dem Sollwert auf der in dem Speicher 18 abgespeicherten Kurve entspricht.

Selbstverständlich ist aus Gründen der Energieeinsparung eine möglichst vollständige Einkopplung der Laserenergie in das Werkstück wünschenswert. Betrachtet man in diesem Zusammenhang die charakteristischen Kurven der Energieeinkopplung als Funktion des Aspektes, wie sie in Figur 2 dargestellt sind, so stellt man fest, daß in dem wünschenswerten Bereich hoher Energieeinkopplung der Kurvenverlauf verhältnismäßig flach ist. Mit anderen Worten: Unter ungünstigen Umständen kann der reflektierte Anteil des Laserstrahles eine verhältnismäßig unempfindliche Funktion der Schweißtiefe s sein. In diesem Falle empfiehlt sich eine Vorrichtung, wie sie in Figur 4 dargestellt ist. Diese Vorrichtung entspricht in vielerlei Hinsicht derjenigen, die oben anhand der Figur 3 schon erläutert wurde; entsprechende Teile sind daher mit demselben Bezugszeichen zuzüglich 100 gekennzeichnet,

Auch bei dem in Figur 4 dargestellten zu bearbeitenden Werkstück handelt es sich um zwei übereinanderliegende Bleche 101, 102, die im Sinne des Pfeiles 106 vorwärtsbewegt werden. Ein erster Laser 108, nachfolgend "Bearbeitungslaser" genannt, sendet einen ersten Laserstrahl 109, nachfolgend "Bearbeitungslaserstrahl" genannt, aus. Der Bearbeitungslaserstrahl 109 wird durch einen ersten Strahlteiler (teildurchlässigen Spiegel) 110 um 90° umgelenkt, so daß er etwa senkrecht auf das obere Blech 101 auftrifft. Zwischen dem ersten Strahlteiler 110 und der Werkstückoberfläche befindet sich wiederum eine Fokussieroptik 111.

Der Bearbeitungslaserstrahl 109 erzeugt in den Blechen 101 und 102 eine Dampfkapillare 104, die von einer Schmelze 105 umgeben ist, und hinterläßt beim Verfahren des Werkstückes eine aus erstarrtem Material 107 gebildete Schweißnaht, genauso, wie dies beim Ausführungsbeispiel von Figur 3 der Fall war.

Senkrecht oberhalb des aus den Blechen 101 und 102 gebildeten Werkstückes ist ein zweiter Laser 113 angeordnet, der nachfolgend "Meßlaser" genannt wird. Der Meßlaser 113 sendet einen zweiten Laserstrahl 114 aus, der nachfolgend "Meßlaserstrahl" genannt wird, und dessen Wellenlänge λ₂ größer als die Wellenlänge λ₁ des Bearbeitungslaserstrahles 109 ist. Der Meßlaserstrahl 114 durchsetzt einen zweiten unter einem Winkel von etwa 45° angestellten Strahlteiler 115, den ersten Strahlteiler 110 und wird von der Fokussieroptik 111 in derselben Weise auf die Dampfkapillare 104 abgebildet wie der Bearbeitungslaserstrahl 109 auch. Das heißt, der Meßlaserstrahl 114 "sieht" am Werkstück dieselben geometrischen Verhältnisse wie der Bearbeitungslaserstrahl 109.

Für die prozentuale Energieeinkopplung des Meßlaserstrahles 114 in das aus den Blechen 101 und 102 bestehende Werkstück gilt nun eine charakteristische Kurve, die erheblich langsamer ansteigt als diejenige des Bearbeitungslaserstrahles 109, wie dies qualitativ der Figur 2 zu entnehmen ist. Der Meßlaser 113, dessen Leistung sehr viel geringer als diejenige des Schweißlasers 108 sein kann, läßt sich daher in einem Bereich der charakteristischen Kurve betreiben, in welchem die Veränderung der Energieeinkopplung mit der Schweißtiefe s noch verhältnismäßig stark ist, der prozentuale reflektierte Anteil des Meßlaserstrahles 114 also ein sensibles Meßinstrument für die Schweißtiefe s ist.

Hierzu wird der von der Oberfläche des Werkstückes 101 reflektierte Anteil des Meßlaserstrahles 114 über den zweiten Strahlteiler 115 um etwa 90° umgelenkt und auf einen Sensor 112 gegeben. Dem Sensor 112 ist ein Filter 116 vorgeschaltet, welches für die Wellenlänge des Schweißlasers 108 undurchlässig ist, so daß der Sensor 112 auf reflektierte Strahlungsanteile des Bearbeitungslaserstrahles 109 nicht anspricht.

Der Sensor 112 erzeugt ein Ausgangssignal, welches dem prozentualen Anteil des an dem oberen Blech 101 reflektierten Meßlaserstrahles 114 entspricht. Dieses Ausgangssignal wird einem Komparator 117 zugeführt. In einem Speicher 118 ist die zuvor experimentell ermittelte charakteristische Kurve für den Meßlaser 113 (entsprechend der Figur 2) abgespeichert. Er ist mit dem zweiten Eingang des Komparators 117 verbunden, dessen Ausgangssignal der Steuereinheit des Bearbeitungslaser 109 zugeführt wird.

Die Funktionsweise der in Figur 4 dargestellten Vorrichtung entspricht derjenigen, die oben anhand der Figur 3 dargestellt wurde. Der einzige Unterschied besteht darin, daß das zur Nachregelung der Schweißtiefe s benutzte Signal das Ausgangssignal eines gesonderten Meßlasers 113 und nicht das Ausgangssignal des Bearbeitungslasers 108 selbst ist. Im übrigen spielen sich die Regelvorgänge ebenso ab, wie dies oben beschrieben wurde.

Bei der obigen Beschreibung der Ausführungsbeispiele nach den Figuren 3 und 4 wurde davon ausgegangen, daß eine vollständige, experimentell ermittelte charakteristische Kurve für den jeweiligen Anwendungsfall in dem Speicher 18 bzw. 118 abgespeichert ist. Hierdurch wird es möglich, die Schweißtiefe an einer Schalttafel der Vorrichtung vorzuwählen, beispielsweise direkt in Millimetern einzugeben. Dies ist überall dort besonders vorteilhaft, wo die Schweißtiefe häufig verändert werden muß. Sofern jedoch an einer Vorrichtung die Schweißtiefe über längere Zeit konstant bleibt, kann auch eine vereinfachte Steuerung eingesetzt werden: In diesem Falle wird in dem Speicher 18 bzw. 118 nicht eine vollständige Kurve abgespeichert und zum Vergleich mit dem Ausgangssignal des Sensors 12 bzw. 112 herangezogen. Vielmehr genügt es, hier eine von Hand einstellbare Spannung als Referenzsignal vorzugeben, das mit dem Ausgangssignal des Sensors 12 bzw. 112 verglichen wird und dessen Wert nicht unbedingt quantitativ mit der Schweißtiefe s korreliert zu sein braucht. Der für das jeweilige Werkstück und die sonstigen Vorrichtungsund Verfahrensparameter geeignete Wert der vorwählbaren Spannung wird einfach experimentell bestimmt, indem der zur richtigen Schweißtiefe s gehörende Wert dieses vorwählbaren Referenzsignals ermittelt wird. Die Vorrichtung orientiert sich dann an diesem voreingestellten Wert und hält die Schweißtiefe s entsprechend konstant.

Die oben erläuterten und in den Figuren 3 und 4 dargestellten Vorrichtungen können ohne weitere Änderung auch dazu eingesetzt werden, ein Werkstück oberflächlich umzuschmelzen, wobei eine definierte, voreinstellbare Umschmelztiefe s eingehalten wird. Das Werkstück kann hierzu auf einem mäanderförmigen Weg unter der Vorrichtung vorbeigeführt werden, so daß nach und nach sämtliche Oberflächenbereiche auf- und umgeschmolzen werden.

Mit einer geringfügigen Veränderung in der Logik der Steuerung, die in den Steuereinheiten der Bearbeitungslaser 8 bzw. 108 enthalten ist, lassen sich die Vorrichtungen nach den Figuren 3 und 4 auch zum Einbringen von Bohrungen mit einer bestimmten Tiefe s einsetzen. In diesem Falle wird das Werkstück während der Bearbeitung gegenüber der Vorrichtung nicht verschoben. Zu Beginn des Bohrvorganges ist die Tiefe der durch den Bearbeitungslaserstrahl 9 bzw. 109 hervorgerufenen Dampfkapillare noch gering, die prozentuale Energieeinkopplung also klein und der reflektierte Energieanteil des Meßlaserstrahles 9 bzw. 114 verhältnismäßig hoch. Das Ausgangssignal des Sensors 12 bzw. 112 der Vorrichtungen der Figuren 3 und 4 ist also höher als ein in dem Speicher 18 bzw. 118 abgespeicherter Wert, welcher dem Sollwert der Bohrungstiefe entspricht. Mit zunehmendem Eindringen des Bearbeitungslaserstrahles 9 bzw. 109 in das Werkstück wird die Tiefe s der Dampfkapillare größer; entsprechend steigt die prozentuale Energieeinkopplung und verringert sich der reflektierte Energieanteil des Meßlaserstrahles 9 bzw. 114. Das Ausgangssignal des Sensors 12 bzw. 112 nähert sich also von oben her dem in dem Speicher 18 bzw. 118 abgespeicherten Wert, bis er diesen schließlich erreicht. In diesem Augenblick wird der Bearbeitungslaserstrahl unterbrochen; das Werkstück kann dann so verfahren werden, daß der Bearbeitungslaserstrahl nunmehr an einer anderen Stelle auftrifft, an welcher die nächste Bohrung eingebracht werden soll.

## Patentansprüche

1. Verfahren zur Bestimmung der momentanen und zur Herbeiführung einer gewünschten Eindringtiefe eines Bearbeitungslaserstrahles (9; 109) in ein Werkstück (1, 2; 101, 102), wobei
a) ein die Funktion eines Meßlaserstrahles ausübender Laserstrahl (9; 114) in die von dem die Funktion des Bearbeitungslaserstrahles ausübenden Laserstrahl (9; 109) im Werkstück (1, 2; 101, 102) gebildete Dampfkapillare (4; 104) gerichtet wird;
b) der prozentuale Anteil des innerhalb der Dampfkapillare (4; 104) am Werkstuck (1, 2; 101, 102) reflektierten, wieder aus der Dampfkapillare (4; 104) austretenden, die Funktion eines Meßlaserstrahles ausübenden Laserstrahles (9; 114) ermittelt wird;
c) die pro Zeit- und Flächeneinheit in das Werkstück (1, 2; 101, 102) durch den die Funktion eines Bearbeitungslaserstrahles ausübenden Laserstrahl (9; 109) eingekoppelte Energie in Abhängigkeit von dem im Schritt b ermittelten Anteil des die Funktion eines Meßlaserstrahles ausübenden Laserstrahles (9; 114) beeinflußt wird.

2. Verfahren nach Anspruch 1, dadurch gekennzeichnet, daß zur Erzeugung des Bearbeitungslaserstrahles (9) und des Meßlaserstrahles (9) derselbe Laser (8) verwendet wird.

3. Verfahren nach Anspruch 1, dadurch gekennzeichnet, daß zur Erzeugung des Bearbeitungslaserstrahles (109) und des Meßlaserstrahles (114) zwei unterschiedliche Laser (108, 113) verwendet werden, wobei die Wellenlänge des Meßlaserstrahles (114) größer als diejenige des Bearbeitungslaserstrahles (109) ist.

4. Verfahren nach einem der Ansprüche 1 bis 3, bei welchem in einem Werkstück eine Bohrung mit einer bestimmten Tiefe erzielt wird, dadurch gekennzeichnet, daß
a) in einem Vorversuch ermittelt wird, welcher prozentuale Anteil des Meßlaserstrahles (9; 114) bei der gewünschten Tiefe der Bohrung am Werkstück (1, 2; 101, 102) reflektiert wird;
b) während der Herstellung der Bohrung durch den Bearbeitungslaserstrahl (9; 109) bei stillstehendem Werkstück (1, 2; 101, 102) kontinuierlich der reflektierte prozentuale Anteil des Meßlaserstrahles (9; 114) überwacht wird und der Bearbeitungslaserstrahl (9; 109) unterbrochen wird, wenn der reflektierte prozentuale Anteil des Meßlaserstrahles (9; 114) den im Vorversuch ermittelten Wert erreicht hat.

5. Verfahren nach einem der Ansprüche 1 bis 4, bei welchem ein Werkstück bis zu einer bestimmten Tiefe aufgeschmolzen oder eine Schweißung in einem Werkstück bis zu einer bestimmten Tiefe eingebracht wird, dadurch gekennzeichnet, daß
a) in einem Vorversuch ermittelt wird, welcher prozentuale Anteil des Meßlaserstrahles (9; 115) bei der gewünschten Tiefe (5) der Schmelze (5; 105) am Werkstück (1, 2; 101, 102) reflektiert wird;
b) während der Herstellung der Schmelze (5; 105) durch den Bearbeitungslaserstrahl (9; 109) bei einer Relativbewegung zwischen Bearbeitungslaserstrahl (9; 109) und Werkstück (1, 2; 101, 102) kontinuierlich der reflektierte prozentuale Anteil des Meßlaserstrahles (9; 114) überwacht wird und Abweichungen zwischen dem momentanen reflektierten prozentualen Anteil des Meßlaserstrahles (9; 114) und dem im Vorversuch ermittelten Wert durch Nachführen der in das Werkstück (1, 2; 101, 102) durch den Bearbeitungslaserstrahl (9; 109) pro Zeit- und Flächen einheit eingekoppelten Energie ausgeregelt werden.

6. Verfahren nach Anspruch 5, dadurch gekennzeichnet, daß die Regelung durch Veränderung der Leistung des Bearbeitungslaserstrahles (9; 109) erfolgt.

7. Verfahren nach Anspruch 5, dadurch gekennzeichnet, daß die Regelung durch Veränderung der Relativgeschwindigkeit zwischen Bearbeitungslaserstrahl (9; 109) und Werkstück (1, 2; 101, 102) erfolgt.

8. Verfahren nach Anspruch 5, dadurch gekennzeichnet, daß die Regelung durch Defokussierung des Bearbeitungslaserstrahles (9, 109) erfolgt.

9. Vorrichtung zur Durchführung des Verfahrens nach einem der vorhergehenden Ansprüche mit
a) einem die Funktion eines Bearbeitungslasers ausübenden Laser (8; 108), dessen Laserstrahl (9; 109) in dem zu bearbeitenden Werkstück (1, 2; 101, 102) eine Dampfkapillare (4; 104) erzeugt;
b) einer Steuereinheit (8; 108), mit welcher die pro Zeit- und Flächeneinheit durch den die Funktions eines Bearbeitungslaserstrahles ausübenden Laserstrahl (9; 109) in das Werkstück (1, 2; 101, 102) eingekoppelte Energie veränderbar ist;
c) einem Sensor (12; 112), welcher einen innerhalb der Dampfkapillare (4; 104) am Werkstück (1, 2; 101, 102) reflektierten, aus der Dampfkapillare (4; 104) wieder austretenden Anteil eines die Funktion eines Meßlaserstrahles ausübenden Laserstrahles (9; 114) erfaßt und ein Ausgangssignal erzeugt,
welches dem prozentualen Anteil des reflektierten, wieder aus der Dampfkapillare austretenden, die Funktion eines Meßlaserstrahles ausübendes Laserstrahles entspricht;
d) einer Referenzsignalquelle (18; 118), welche ein Referenzsignal erzeugt, das dem bei einer gewünschten Eindringtiefe (s) des die Funktion eines Bearbeitungslaserstrahles ausübenden Laserstrahles (9; 109) aus der Dampfkapillare (4; 104) wieder austretenden prozentualen Anteil des die Funktion eines Meßlaserstrahles ausübenden Laserstrahles (9; 114) entspricht;
e) einem Komparator (17; 117), welcher das Ausgangssignal des Sensors (12; 112) mit dem Referenzsignal vergleicht und ein die Steuereinheit (8; 108) beaufschlagendes Ausgangssignal abgibt.

10. Vorrichtung nach Anspruch 9, dadurch gekennzeichnet, daß ein einziger Laser (8) vorgesehen ist, dessen Strahl (9) sowohl als Bearbeitungs- als auch als Meßlaserstrahl dient.

11. Vorrichtung nach Anspruch 9, dadurch gekennzeichnet, daß zwei unterschiedliche Laser (108, 113) vorgesehen sind, von denen der erste (108) den Bearbeitungslaserstrahl (109) und der zweite (113) den Meßlaserstrahl (114) erzeugt, wobei die Wellenlänge des Meßlaserstrahles (114) größer als diejenige des Bearbeitungslaserstrahles (109) ist.

12. Vorrichtung nach einem der Ansprüche 9 bis 11, dadurch gekennzeichnet, daß die Referenzsignalquelle (18; 118) einen Speicher umfaßt, in welchem ein in einem Vorversuch ermittelter Wert ablegbar ist, welcher dem reflektierten prozentualen Anteil des Meßlaserstrahles (9; 114) bei einer gewünschten Eindringtiefe des Bearbeitungslaserstrahles (9; 109) entspricht.

13. Vorrichtung nach Anspruch 12, dadurch gekennzeichnet, daß in dem Speicher (18; 118) eine Kurve abgelegt ist, welche die funktionale Beziehung zwischen der Eindringtiefe (s) des Bearbeitungslaserstrahles (9; 109) und dem reflektierten prozentualen Anteil des Meßlaserstrahles (9; 114) wiedergibt.

14. Vorrichtung nach einem der Ansprüche 9 bis 13 zur Herstellung von Bohrungen, dadurch gekennzeichnet,
daß
a) das Werkstück (1, 2; 101, 102) gegenüber dem Bearbeitungslaserstrahl (9; 109) fest positioniert ist;
b) der Komparator (17; 117) ein Ausgangssignal abgibt, wenn das Ausgangssignal des Sensors (12; 112) dem Referenzsignal entspricht;
c) die Steuereinheit (8; 108) den Bearbeitungslaserstrahl (9; 109) bei Empfang des Ausgangssignales des Komparators (17; 117) unterbricht.

15. Vorrichtung nach einem der Ansprüche 9 bis 13, mit welcher das Werkstück bis zu einer bestimmten Tiefe aufschmelzbar ist oder eine Schweißung in ein Werkstück bis zu einer gewissen Tiefe einbringbar ist, dadurch gekennzeichnet, daß
a) eine Einrichtung vorgesehen ist, welche eine Relativbewegung zwischen dem Werkstück (1, 2; 101, 102) und dem Bearbeitungslaserstrahl (9; 109) erzeugt;
b) der Komparator (17; 117) ein Ausgangssignal abgibt, welches für die Abweichung zwischen dem Ausgangssignal des Sensors (12; 112) und dem Referenzsignal repräsentativ ist;
c) die Steuereinheit (8; 108) eine Regeleinrichtung umfaßt, welche durch Veränderung der in das Werkstück (1, 2; 101, 102) pro Zeit- und Flächen einheit durch den Bearbeitungslaserstrahl (9; 109) eingekoppelten Energie das Ausgangssignal des Komparators (17; 117) auf Null zurückführt.

16. Vorrichtung nach Anspruch 15, dadurch gekennzeichnet, daß die Steuereinheit (8; 108) die Geschwindigkeit der Relativbewegung zwischen Werkstück (1, 2; 101, 102) und Bearbeitungslaserstrahl (9; 109) beeinflußt.

17. Vorrichtung nach Anspruch 15, dadurch gekennzeichnet, daß die Steuereinheit (8; 108) die Leistung des Bearbeitungslaserstrahles (9; 109) beeinflußt.

18. Vorrichtung nach Anspruch 15, dadurch gekennzeichnet, daß die Steuereinheit (8; 108) die Fokussierung des Bearbeitungslasertrahles (9, 109) beeinflußt.

## Claims

1. Process for determining the momentary, and for securing a desired, depth of penetration of a working laser beam (9; 109) into a workpiece (1, 2; 101, 102), in which
a) a laser beam (9; 114) exercising the function of a measurement laser beam is directed into the vapour capillary (4; 104) formed in the workpiece (1, 2; 101, 102) by the laser beam (9; 109) exercising the function of the working laser beam;
b) the percentage proportion of the laser beam (9; 114) exercising the function of a measurement laser beam which is reflected within the vapour capillary (4; 104) on the workpiece (1, 2; 101, 102) and exits out of the vapour capillary (4; 104) again is determined;
c) the energy launched per unit of time and area into the workpiece (1, 2; 101, 102) by the laser beam (9; 109) exercising the function of a working laser beam is influenced as a function of the proportion determined in step b of the laser beam (9; 114) exercising the function of a measurement laser beam.

2. Process according to claim 1, characterised in that the same laser (8) is used to generate the working laser beam (9) and the measurement laser beam (9).

3. Process according to claim 1, characterised in that two different lasers (108, 113) are used to generate the working laser beam (109) and the measurement laser beam (114), wherein the wavelength of the measurement laser beam (114) is greater than that of the working laser beam (109).

4. Process according to one of claims 1 to 3, in which a bore with a particular depth is obtained in a workpiece, characterised in that
a) it is determined in a preliminary test what percentage proportion of the measurement laser beam (9; 114) is reflected on the workpiece (1, 2; 101, 102) at the desired depth of the bore;
b) during the production of the bore by the working laser beam (9; 109) with the workpiece (1, 2; 101, 102) stationary the reflected percentage proportion of the measurement laser beam (9; 114) is monitored continuously and the working laser beam (9; 109) is interrupted if the reflected percentage proportion of the measurement laser beam (9; 114) has reached the value determined in the preliminary test.

5. Process according to one of claims 1 to 4, in which a workpiece is melted down to a particular depth or a welding is introduced in a workpiece down to a particular depth, characterised by the fact that
a) it is determined in a preliminary test what percentage proportion of the measurement laser beam 9; 114) is reflected on the workpiece (1, 2; 101, 102) at the desired depth (5) of the melt (5; 105);
b) during the production of the melt (5; 105) by the working laser beam (9; 109) with a relative movement between working laser beam (9; 109) and workpiece (1, 2; 101, 102) the reflected percentage proportion of the measurement laser beam (9; 114) is monitored continuously and deviations between the momentarily reflected percentage proportion of the measurement laser beam (9, 114) and the value determined in the preliminary test are smoothed out by adjustment of the energy launched into the workpiece (1, 2; 101, 102) by the working laser beam (9; 109) per unit of time and area.

6. Process according to claim 5, characterised in that the control takes place by changing of the output of the working laser beam (9; 109).

7. Process according to claim 5, characterised in that the control takes place by changing of the relative speed between working laser beam (9; 109) and workpiece (1, 2; 101, 102).

8. Process according to claim 5, characterised in that the control takes place by defocussing of the working laser beam (9, 109).

9. Device for carrying out the process according to one of the preceding claims with
a) a laser (8; 108) exercising the function of a working laser (8, 108) whose laser beam (9; 109) generates in the workpiece (1, 2; 101, 102) to be worked a steam capillary (4; 104);
b) a control unit (8; 108) with which the energy launched into the workpiece (1, 2; 101, 102) per unit of time and area by the laser beam (9; 109) exercising the function of a working laser beam is changeable;
c) a sensor (12; 112), which detects a component of a laser beam (9; 114) exercising the function of a measurement laser beam, which component is reflected within the vapour capillary (4; 104) on the workpiece (1, 2; 101, 102) and exits again from the vapour capillary (4; 104), and generates an output signal which corresponds to the percentage proportion of the reflected laser beam exiting again from the vapour capillary and exercising the function of a measurement laser beam;
d) a reference signal source (18; 118) which generates a reference signal which corresponds to the percentage proportion of the laser beam (9; 114) exercising the function of a measurement laser beam, which proportion exits again from the steam capillary (4; 104) at a desired depth of penetration (s) of the laser beam (9; 109) exercising the function of a working laser beam;
e) a comparator (17; 117) which compares the output signal of the sensor (12; 112) with the reference signal and emits an output signal acting upon the control unit (8; 108)

10. Device according to claim 9, characterised in that a single layer (8) is provided, whose beam (9) serves both as a working and as a measuring laser beam.

11. Device according to claim 9, characterised in that two different lasers (108, 113) are provided, the first (108) of which generates the working laser beam (109) and the second (113) the measurement laser beam (114), wherein the wavelength of the measurement laser beam (114) is greater than that of the working laser beam (109).

12. Device according to one of claims 9 to 11, characterised in that the reference signal source (18; 118) incorporates a store in which there can be deposited a value determined in a preliminary test which corresponds to the reflected percentage proportion of the measurement laser beam (9; 114) at a desired depth of penetration of the working laser beam (9; 109).

13. Device according to claim 12, characterised in that a curve is deposited in the store (18; 118) which reproduces the functional relationship between the depth of penetration (s) of the working laser beam (9; 109) and the reflected percentage proportion of the measurement laser beam (9; 114).

14. Device according to one of claims 9 to 13 for producing bores, characterised in that
a) the workpiece (1, 2; 101, 102) is firmly positioned relative to the working laser beam (9; 109);
b) the comparator (17; 117) emits an output signal if the output signal of the sensor (12; 112) corresponds to the reference signal;
c) the control unit (8; 108) interrupts the working laser beam (9; 109) on receipt of the output signal of the comparator (17; 117).

15. Device according to one of claims 9 to 13, with which the workpiece is meltable down to a particular depth or a welding can be introduced into a workpiece down to a certain depth, characterised in that
a) an apparatus is provided which generates a relative movement between the workpiece (1, 2; 101, 102) and the working laser beam (9; 109);
b) the comparator (17; 117) emits an output signal which is representative of the deviation between the output signal of the sensor (12; 112) and the reference signal;
c) the control unit (8; 108) incorporates a regulating device which by changing the energy launched into the workpiece (1, 2; 101, 102) per unit of time and area by the working laser beam (9; 109) resets the output signal of the comparator (17; 117) to zero.

16. Device according to claim 15, characterised in that the control unit (8; 108) influences the speed of the relative movement between workpiece (1, 2; 101, 102) and working laser beam (9; 109).

17. Device according to claim 15, characterised in that the control unit (8; 108) influences the output of the working laser beam (9; 109).

18. Device according to claim 15, characterised in that the control unit (8; 108) influences the focussing of the working laser beam (9; 109).

## Revendications

1. Procédé pour déterminer la profondeur de pénétration momentanée et produire une profondeur de pénétration souhaitée d'un faisceau laser d'usinage (9 ; 109) dans une pièce (1, 2 ; 101, 102), selon lequel
a) un faisceau laser (9 ; 114) jouant le rôle de faisceau laser de mesure est dirigé dans le capillaire de vapeur (4 ; 104) formé dans la pièce (1, 2 ; 101, 102) par le faisceau laser (9 ; 109) jouant le rôle de faisceau laser d'usinage ;
b) on détermine la part, en pourcentage, du faisceau laser (9 ; 114) jouant le rôle de faisceau laser de mesure qui est réfléchie à l'intérieur du capillaire de vapeur (4 ; 104) sur la pièce (1, 2 ; 101, 102) et ressort du capillaire de vapeur (4 ; 104) ;
c) on modifie l'énergie incorporée par unité de temps et de surface dans la pièce (1, 2 ; 101, 102) par le faisceau laser (9 ; 109) jouant le rôle de faisceau laser d'usinage, en fonction de la part déterminée à l'étape b) du faisceau laser (9 ; 114) jouant le rôle de faisceau laser de mesure.

2. Procédé selon la revendication 1, caractérisé en ce qu'on utilise le même laser (8) pour produire le faisceau laser d'usinage (9) et le faisceau laser de mesure (9).

3. Procédé selon la revendication 1, caractérisé en ce qu'on utilise deux lasers différents (108, 113) pour produire le faisceau laser d'usinage (109) et le faisceau laser de mesure (114), la longueur d'onde du faisceau laser de mesure (114) étant supérieure à celle du faisceau laser d'usinage (109).

4. Procédé selon une des revendications 1 à 3, selon lequel on réalise dans une pièce un perçage de profondeur déterminée, caractérisé en ce que
a) au cours d'un essai préliminaire, on détermine quel pourcentage du faisceau laser de mesure (9 ; 114) est réfléchi sur la pièce (1, 2 ; 101, 102) pour la profondeur souhaitée du perçage ;
b) pendant la réalisation du perçage par le faisceau laser d'usinage (9 ; 109), la pièce (1, 2 ; 101, 102) étant alors immobile, on surveille en continu le pourcentage réfléchi du faisceau laser de mesure (9 ; 114), et le faisceau laser d'usinage (9 ; 109) est interrompu lorsque le pourcentage réfléchi du faisceau laser de mesure (9 ; 114) a atteint la valeur déterminée au cours de l'essai préliminaire.

5. Procédé selon une des revendications 1 à 4, selon lequel une pièce est fondue jusqu'à une profondeur déterminée, ou bien on réalise une soudure dans une pièce jusqu'à une profondeur déterminée, caractérisé en ce que
a) au cours d'un essai préliminaire, on détermine quel pourcentage du faisceau laser de mesure (9 ; 114) est réfléchi sur la pièce (1, 2 ; 101, 102) pour la profondeur souhaitée (5) de la masse fondue (5; 105);
b) pendant la réalisation de la masse fondue (5 ; 105) par le faisceau laser d'usinage (9 ; 109) avec un mouvement relatif entre le faisceau laser d'usinage (9 ; 109) et la pièce (1, 2 ; 101, 102), on surveille en continu le pourcentage réfléchi du faisceau laser de mesure (9 ; 114), et des écarts entre le pourcentage réfléchi momentané du faisceau laser de mesure (9 ; 114) et la valeur déterminée au cours de l'essai préliminaire sont régulés en ajustant l'énergie incorporée par unité de temps et de surface dans la pièce (1, 2 ; 101, 102) par le faisceau laser d'usinage (9 ; 109).

6. Procédé selon la revendication 5, caractérisé en ce que la régulation s'effectue en modifiant la puissance du faisceau laser d'usinage (9 ; 109).

7. Procédé selon la revendication 5, caractérisé en ce que la régulation s'effectue en modifiant la vitesse relative entre le faisceau laser d'usinage (9 ; 109) et la pièce (1, 2 ; 101, 102).

8. Procédé selon la revendication 5, caractérisé en ce que la régulation s'effectue en défocalisant le faisceau laser d'usinage (9 ; 109).

9. Dispositif pour la mise en oeuvre du procédé selon une des revendications précédentes, comprenant
a) un laser (8 ; 108) jouant le rôle de laser d'usinage, dont le faisceau laser (9 ; 109) produit un capillaire de vapeur (4 ; 104) dans la pièce (1, 2 ; 101, 102) à usiner ;
b) une unité de commande (8 ; 108), qui permet de modifier l'énergie incorporée par unité de temps et de surface dans la pièce (1, 2 ; 101, 102) par le faisceau laser (9 ; 109) jouant le rôle de faisceau laser d'usinage ;
c) un capteur (12 ; 112), qui détecte la part d'un faisceau laser (9 ; 114) jouant le rôle de faisceau laser de mesure qui est réfléchie à l'intérieur du capillaire de vapeur (4 ; 104) sur la pièce (1, 2 ; 101, 102) et ressort du capillaire de vapeur (4 ; 104), et qui produit un signal de sortie qui correspond à la part, en pourcentage, du faisceau laser jouant le rôle de faisceau laser de mesure qui est réfléchie et ressort du capillaire de vapeur ;
d) une source (18 ; 118) de signal de référence, qui produit un signal de référence qui correspond à la part, en pourcentage, du faisceau laser (9 ; 114) jouant le rôle de faisceau laser de mesure qui ressort du capillaire de vapeur (4 ; 104) pour une profondeur (s) souhaitée de pénétration du faisceau laser (9 ; 109) jouant le rôle de faisceau laser d'usinage ;
e) un comparateur (17 ; 117), qui compare le signal de sortie du capteur (12 ; 112) au signal de référence et délivre un signal de sortie sollicitant l'unité de commande (8 ; 108).

10. Dispositif selon la revendication 9, caractérisé en ce qu'un seul laser (8) est prévu, dont le faisceau (9) sert à la fois de faisceau laser d'usinage et de faisceau laser de mesure.

11. Dispositif selon la revendication 9, caractérisé en ce que deux lasers différents (108, 113) sont prévus, dont le premier (108) produit le faisceau laser d'usinage (109) et le deuxième (113) le faisceau laser de mesure (114), la longueur d'onde du faisceau laser de mesure (114) étant supérieure à celle du faisceau laser d'usinage (109).

12. Dispositif selon une des revendications 9 à 11, caractérisé en ce que la source (18 ; 118) de signal de référence comprend une mémoire dans laquelle peut être déposée une valeur, déterminée au cours d'un essai préliminaire, qui correspond au pourcentage du faisceau laser de mesure (9 ; 114) qui est réfléchi pour une profondeur de pénétration souhaitée du faisceau laser d'usinage (9 ; 109).

13. Dispositif selon la revendication 12, caractérisé en ce qu'une courbe est déposée dans la mémoire (18 ; 118), qui reproduit la relation fonctionnelle entre la profondeur de pénétration (s) du faisceau laser d'usinage (9 ; 109) et le pourcentage réfléchi du faisceau laser de mesure (9 ; 114).

14. Dispositif selon une des revendications 9 à 13 pour réaliser des perçages, caractérisé en ce que
a) la pièce (1, 2 ; 101, 102) est positionnée en position fixe par rapport au faisceau laser d'usinage (9 ; 109) ;
b) le comparateur (17 ; 117) délivre un signal de sortie lorsque le signal de sortie du capteur (12 ; 112) correspond au signal de référence ;
c) l'unité de commande (8 ; 108) interrompt le faisceau laser d'usinage (9 ; 109) à la réception du signal de sortie du comparateur (17 ; 117).

15. Dispositif selon une des revendications 9 à 13 avec lequel la pièce peut être fondue jusqu'à une profondeur déterminée ou bien une soudure peut être réalisée dans une pièce jusqu'à une profondeur déterminée, caractérisé en ce que
a) un organe est prévu, qui produit un mouvement relatif entre la pièce (1, 2 ; 101, 102) et le faisceau laser d'usinage (9 ; 109) ;
b) le comparateur (17 ; 117) délivre un signal de sortie qui est représentatif de l'écart entre le signal de sortie du capteur (12 ; 112) et le signal de référence ;
c) l'unité de commande (8 ; 108) comprend un organe de régulation qui ramène le signal de sortie du comparateur (17 ; 117) à zéro en modifiant l'énergie incorporée par unité de temps et de surface dans la pièce (1, 2 ; 101, 102) par le faisceau laser d'usinage (9 ; 109).

16. Dispositif selon la revendication 15, caractérisé en ce que l'unité de commande (8 ; 108) agit sur la vitesse du mouvement relatif entre la pièce (1, 2 ; 101, 102) et le faisceau laser d'usinage (9 ; 109).

17. Dispositif selon la revendication 15, caractérisé en ce que l'unité de commande (8 ; 108) agit sur la puissance du faisceau laser d'usinage (9 ; 109).

18. Dispositif selon la revendication 15, caractérisé en ce que l'unité de commande (8 ; 108) agit sur la focalisation du faisceau laser d'usinage (9 ; 109).
